# FASCICULE DE BREVET EUROPEEN

(11) **EP 2 540 531 B1**
(45) Date de publication et mention de la délivrance du brevet: **03.05.2017**
(21) Numéro de dépôt: 12173468.5
(22) Date de dépôt: 25.06.2012
(51) Int. Cl.: B62B 5/00, B62B 3/02, B60D 1/26, B60D 1/48, B60D 1/00

(54) **Train de convoyage**
Lastzug
Trailer train

(30) Priorité: 27.06.2011 FR 1155709; 30.09.2011 FR 1158884; 02.04.2012 FR 1253022
(43) Date de publication de la demande: 02.01.2013
(73) Titulaire: COUTIER INDUSTRIE, 57970 Basse Ham (FR)
(72) Inventeur: Coutier, Charles, 57570 Cattenom (FR)
(74) Mandataire: Lavialle, Bruno François Stéphane

(56) Documents cités:
- EP-A1- 1 743 828
- FR-A1- 2 843 563
- FR-A1- 2 886 216

## Description

La présente invention concerne un ensemble de manutention comprenant une base roulante et un chariot apte à recevoir une base roulante.

### ARRIERE PLAN DE L'INVENTION

La manutention de pièces dans les ateliers de montage par exemple, s'opère au moyen de trains de bases roulantes sur le plateau desquelles les diverses pièces sont présentes. La base demeure en général le support unique pour ces pièces et donc est destiné à stationner au poste de montage auquel les pièces sont destinées. Le convoyage de ces bases roulantes se fait par train qui circule d'un poste à l'autre pour délivrer les bases roulantes. Les bases sont équipées de moyens d'attelage connus en eux-mêmes pour constituer directement un train de bases directement attelées les unes aux autres ou pour être insérées individuellement dans un chariot de transport, ce qui permet de simplifier le plan de distribution des bases à chaque poste. En effet, pour éviter les attelages et dételages trop nombreux, il faut, dans le cas d'un train de bases, prévoir l'ordre dans lequel les bases sont délivrées le long du trajet parcouru par le train. Il faut ensuite prévoir un deuxième parcours pour reprendre les bases vides. Dans le cas d'un train de chariots, chaque base est dételée sans nuire à la continuité du train et chaque base pleine dételée peut être immédiatement remplacée par une base vide à évacuer.

Il est ce pendant intéressant de disposer de bases qui puissent être employées soit directement soit dans des chariots.

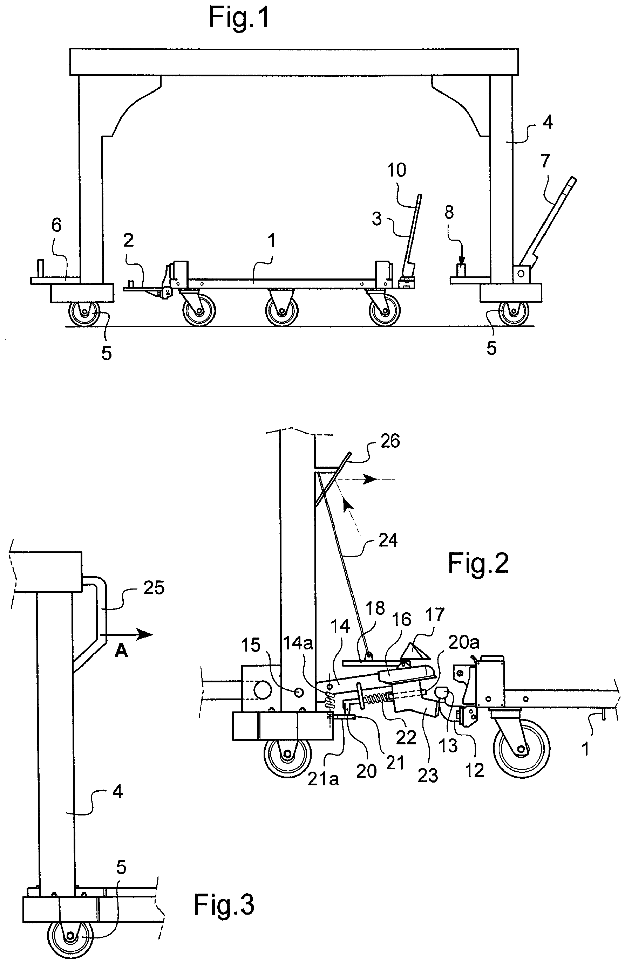

La figure 1 illustre schématiquement l'état de la technique.

Cette figure illustre un ensemble de manutention selon le préambule de la revendication 1. On a représenté sur cette figure une base roulante 1 équipée de moyens d'attelage ici comprenant à l'arrière, un axe 2 destiné à pénétrer dans l'ouverture 3a d'un timon 3 basculant que toute base possède à l'avant. Un chariot 4 est ici représenté sous la forme d'un arceau vertical, pourvu de moyens de roulement 5 et de moyens d'attelage arrière 6 et avant 7 qui sont du même type que ceux de la base roulante. Cet arceau peut être en forme de C horizontal. A l'intérieur de l'arceau, le chariot comporte un axe 8 qi peut être introduit dans l'anneau 3a ménagé à l'extrémité de chaque timon 3 de base. Il existe des moyens de sécurité non représentés pour assurer l'attelage contre les dételages intempestifs.

L'inconvénient important que l'on rencontre dans ce type de matériel réside dans la difficulté de réaliser l'attelage d'une base à l'intérieur du chariot. En effet, l'opérateur manie le chariot au moyen du timon 3 relevé pour l'introduire dans l'arceau puis ajuste la position relative de l'arceau et de la base, tant bien que mal, à l'étroit entre le timon et le chariot, pour que le rabattement du timon soit tel que son anneau tombe à l'aplomb de l'axe 8.

Les figures 10 et 11 du document EP 1 743 828 Al décrivent un autre ensemble de manutention de l'état de la technique. L'invention a pour but de pallier cet inconvénient au moyen d'une disposition simple pour faciliter cet attelage.

### OBJET DE L'INVENTION

C'est ainsi que l'invention a pour objet un ensemble de manutention comprenant:
- une base roulante équipée d'un timon basculant à l'une de ses extrémités et d'un moyen complémentaire fixe et court à son autre extrémité et
- un chariot dans lequel la base peut être attelée par l'une de ses extrémités,
dans lequel les moyens d'attelage de la base dans le chariot sont constitués par le moyen fixe susdit de la base et un moyen complémentaire porté par l'extrémité d'un levier court monté basculant dans le chariot entre une position haute de libération du moyen fixe et une position basse dans laquelle le moyen fixe coopère avec le moyen complémentaire à l'attelage de la base au chariot.

Grâce à cette disposition, l'opérateur peut manoeuvrer plus aisément la base par rapport au chariot car le point d'attelage est situé du côté de l'extrémité de la base opposée à son timon qui demeure relevé, ce qui conserve pour l'opérateur un plus grand espace pour la manoeuvre de la base.

Le moyen fixe peut être un axe vertical et le moyen complémentaire, un anneau à l'extrémité du levier basculant du chariot mais, de manière préférée, le moyen fixe est un crochet à sphère d'attelage tandis que le moyen complémentaire comporte un boîtier pour coiffer la sphère.

De manière avantageuse, l'ensemble selon l'invention comporte des moyens qui permettent un attelage automatique de la base au chariot et un dételage simplifié. Ces moyens comportent notamment:
- une came montée coulissante sur le levier, escamotée par un poussoir dont l'extrémité est susceptible d'être déplacée par la sphère lors de la dernière phase de son approche sous le boîtier pour maintenir le levier porte boîtier en position haute, à l'encontre de l'effet d'un organe élastique de rappel,
- un V de guidage, situé sensiblement au niveau de la sphère quand le levier est dans sa position haute pour amener de manière certaine la sphère à désarmer la came et à être coiffée par le boîtier,
- un élément de transmission du mouvement d'une poignée de dételage qui agit sur le boîtier pour le déplacer à l'encontre de l'effet susdit de l'organe de rappel du levier en position basse, cet élément de transmission étant de préférence attelé au levier par l'intermédiaire d'un élément (poignée) de verrouillage du boîtier sur la sphère, connu en lui-même et équipé d'une pédale de mise en oeuvre par le pied de l'opérateur,
- un organe de rappel qui tend à replacer au dételage le poussoir dans sa position apte à être au contact avec la sphère et à maintenir la came dans son état non escamoté,
- un miroir disposé à l'aplomb des moyens d'attelage de la base au chariot.

De préférence également, au moins un élément souple est suspendu à un arceau du chariot et a une longueur telle que son extrémité inférieure s'étende juste au-dessus de la base chargée, et/ou le chariot comporte une extrémité avant tractée pourvue d'un timon équipé de moyens d'attelage et une extrémité arrière tractée équipée de moyens complémentaires d'attelage qui sont agencés pour coopérer avec les moyens d'attelage du timon d'un deuxième chariot ou du timon d'une deuxième base roulante.

Avantageusement, le moyen complémentaire comprend un crochet double ayant des extrémités inférieure et supérieure qui sont agencées pour coopérer avec des timons de types différents et, selon une caractéristique particulière, l'extrémité supérieure du crochet double est pourvue d'une boule d'attelage.

D'autres caractéristiques et avantages de l'invention ressortiront de la description donnée ci après à titre d'exemple.

### BREVE DESCRIPTION DES DESSINS

Il sera fait référence aux dessins annexés dans lesquels :
- la figure 1 est, comme déjà dit, une illustration schématique d'un appareil selon l'état de la technique,
- les figures 2 et 3 illustrent par des vues partielles les dispositions particulières de l'invention aux extrémités longitudinales de l'ensemble du chariot,
- la figure 4 est une vue générale en élévation d'un chariot selon l'invention,
- la figure 5 est une vue analogue à la figure 4 d'un train de chariots et bases roulantes conformes à l'invention,
- _ la figure 6 est une vue schématique en élévation d'une base roulante selon une variante de l'invention,
- la figure 7 est une vue analogue à la figure 6 d'une base roulante selon une autre variante de l'invention.

### DESCRIPTION DETAILLEE DE L'INVENTION

Aux figures 2 et 3, on retrouve certains des éléments déjà représentés à la figure 1, notamment la base roulante 1 et le chariot 4.

De manière connue, la base roulante a une première extrémité qui comporte un timon 3 pourvu à son extrémité d'un organe d'attelage en forme de boîtier 10 avec une poignée de verrouillage 11. La base roulante a une deuxième extrémité qui est équipée d'un crochet 12 à boule ou sphère 13.

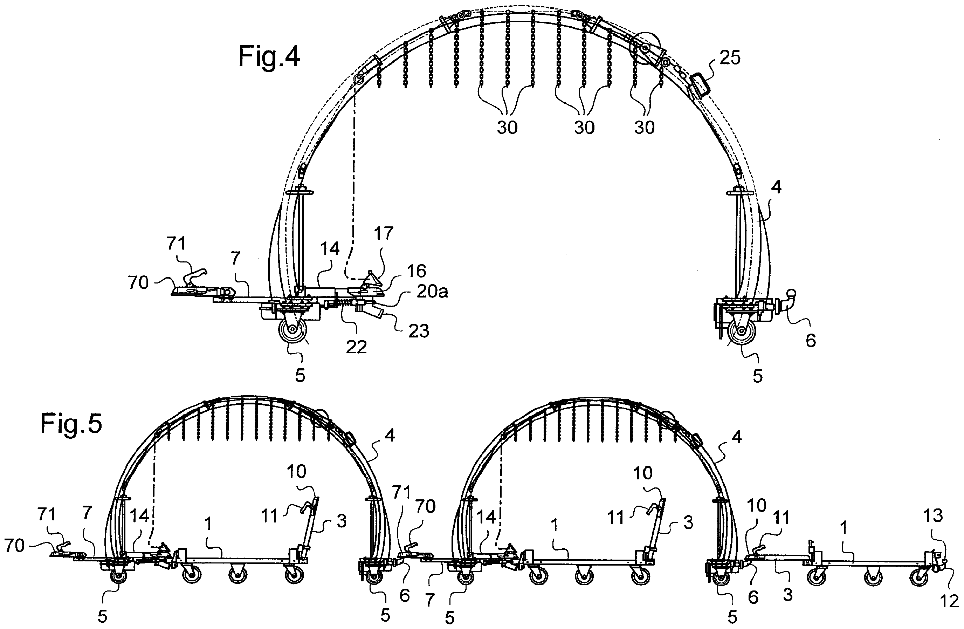

Le chariot 4 comporte une extrémité tractée pourvue d'un timon 7 ayant une extrémité libre pourvue d'un organe d'attelage en forme de boîtier 70 avec une poignée de verrouillage 71 et une extrémité opposée dite de traction pourvue d'un crochet 6 à boule. Cet agencement permet la réalisation de train de chariots 4 par la coopération des boîtiers 70 avec les crochets à boules 71 des chariots 4 (voir la figure 5). On notera que le boîtier 70 du premier chariot 4 du train peut être accroché à un crochet d'un véhicule tracteur tandis que le crochet à boule 6 du dernier chariot 4 du train peut être utilisé pour tracter directement une base roulante 1 (le boîtier 10 du timon 3 de ladite base roulante 1 étant alors engagé sur la boule du crochet à boule 6 dudit dernier chariot 4).

Selon l'invention, le chariot 4 comporte, à son extrémité tractée (figure 2), pour atteler la base roulante, un mécanisme qui comporte les éléments suivants:
- un levier 14 articulé en 15 autour d'un axe horizontal sur le chariot et porteur, à son extrémité libre d'un boîtier 16 du genre du boîtier 10 mais dans lequel l'organe de verrouillage a été légèrement modifié pour d'une part, permettre son actionnement par le pied d'un opérateur, grâce à une pédale 17 et, d'autre part, présenter une bielle de déverrouillage 18 manoeuvrable vers le haut. Le levier 14 est en permanence rappelé vers le bas par un organe de rappel (ressort) 14a.
- une came 20 qui, dans un premier état (représenté), repose sur une plaque 21 solidaire du chariot et dans un second état, après une translation vers la gauche de la figure 2, tombe dans un orifice 21a de cette plaque, sous l'effet de rappel du ressort 14a. Cette came 20 est en effet portée par le levier 14 et peut coulisser sous ce dernier. Un ressort 22 tend à tirer la came 20 vers la droite de la figure, dans une position qui ne lui permet pas de tomber dans l'orifice 21a. La came 20 possède une extension 20a en direction de l'extrémité libre du levier 14 qui forme un poussoir à hauteur de la sphère 13 de sorte que, quand celle-ci est approchée de la came, elle la pousse sur une amplitude suffisante pour qu'elle tombe dans l'orifice 21 et que le levier 14 descende. Ainsi, le boîtier 16 vient-il coiffer la sphère 13 et l'opérateur, en manoeuvrant la pédale 17 avec le pied, verrouille l'attelage ainsi réalisé.
- un V de centrage 23 sous le poussoir 20a de la came 20 pour guider de manière certaine la sphère dans la zone où elle viendra immanquablement au contact du poussoir et à l'aplomb précis du boîtier qui la coiffe.
- un câble 24 qui court dans la structure du chariot depuis la bielle de déverrouillage 18 jusqu'à une poignée 25 de traction de ce câble suivant la flèche A (voir figure 3) située à l'autre extrémité du chariot qui en est l'extrémité arrière. Ainsi quand l'opérateur souhaite dételer la base roulante, il tire sur la poignée 25, ce qui a pour effet de soulever la bielle 18. Le déverrouillage de l'attelage est obtenu et le boîtier peut être séparé de la sphère vers le haut, à l'encontre du rappel du ressort 14a. La came sort de l'orifice et sous l'action du ressort 22 coulisse vers la droite de la figure pour placer le poussoir 20a dans sa position d'origine. Le câble 24 peut être remplacé par tout jeu de bielles et leviers adapté à transmettre le mouvement de la poignée 25 à la bielle 18.

On notera enfin la présence d'un miroir 26 en partie supérieure avant du chariot, à l'aplomb des moyens d'attelage, qui est tourné vers l'arrière pour permettre à l'opérateur situé aussi à l'arrière de l'ensemble, de voir et contrôler le déroulement des opérations d'attelage et de dételage.

On comprend que les dispositions de l'invention constituent une amélioration importante de l'ergonomie pour l'opérateur (cariste) chargé de la manutention des bases roulantes vides ou pleines dans un atelier par exemple de montage de véhicules automobiles. En effet, cet opérateur est situé à l'arrière de la base et l'attelage est réalisé en poussant la base ce qui est plus aisé que de la tirer. De plus, au moment du dételage, il suffit de pousser latéralement l'extrémité arrière de la base qui tournera sur elle-même grâce à ses roues en losange et se désengagera aisément du V de centrage 23. L'opérateur peut aisément passer sous l'arceau que forme le chariot 4 pour dégager la base sans difficultés ni efforts.

On notera sur la figure 4 que des éléments souples, ici des chaînes 30, sont suspendus à l'arceau du chariot 4 pour matérialiser une zone de danger et empêcher ainsi qu'un opérateur passe sous l'arceau par inadvertance.

Les chaînes 30 ont une longueur telle que leur extrémité inférieure s'étende juste au-dessus de la base chargée.

Les chaînes 30 peuvent être fixées sous l'arceau, sur un flanc de l'arceau ou sur les deux flancs de celui-ci.

De préférence, ces chaînes 30 sont colorées et/ou contrastées pour se détacher visuellement de leur environnement. Les chaînes 30 sont par exemple bicolores.

Le chariot peut ne comprendre qu'un seul élément souple tel qu'un rideau. En outre, on notera que l'élément souple peut équiper tout type de chariot comportant un arceau indépendamment des moyens d'attelage de celui-ci.

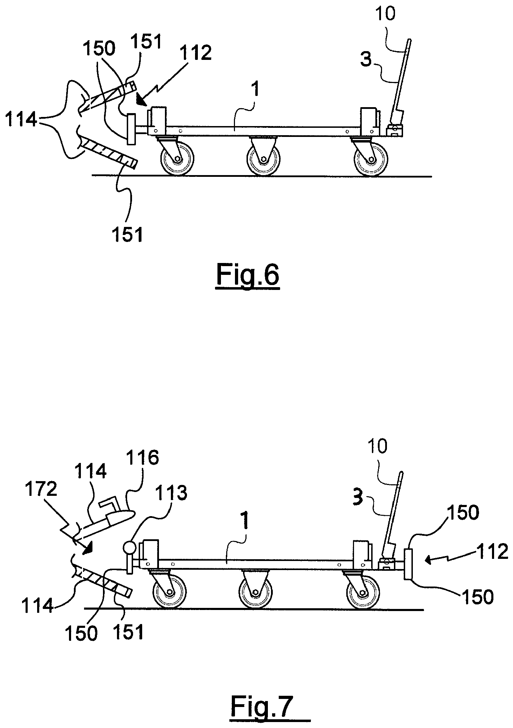

Dans la variante de la figure 6, la base roulante est identique à celle précédemment décrite sauf en ce que sa deuxième extrémité est équipé d'un crochet double 112 sous la forme d'un barreau vertical ayant une extrémité supérieure et une extrémité inférieure, toutes deux référencées 150 sur la figure 6, apte à être engagées dans un anneau 151 d'un timon 114. Pour être plus précis, l'extrémité supérieure 150 est destinée à être engagée dans un timon rappelé d'une position haute vers une position horizontale par la gravité comme le timon 3 ou par un ressort comme le levier 14. L'extrémité inférieure 150 est destinée à être engagée dans un timon rappelé d'une position basse vers une position horizontale par un ressort. De tels timons sont connus en eux-mêmes et peuvent être montés sur des chariots ou d'autres bases roulantes.

On comprend que la base roulante ainsi équipée peut être reliée à des timons différents augmentant ses possibilités d'emploi.

Dans la variante de la figure 7, la base roulante est équipée d'un crochet double 112, 172 respectivement à sa première extrémité et à sa deuxième extrémité.

Le crochet double 112 est identique au crochet double 112 décrit en relation avec la figure 6.

Le crochet double 172 est identique au crochet double 112 sauf en ce que son extrémité supérieure est équipée d'une boule 113 destinée à coopérer avec un boîtier 116 d'un timon 114 rappelé d'une position haute vers une position horizontale par la gravité comme le timon 3 ou par un ressort comme le levier 14.

Bien entendu, l'invention n'est pas limitée aux modes de réalisation décrits mais englobe toute variante couverte par la définition de l'invention figurant dans les revendications.

Ainsi, les moyens d'attelage peuvent avoir une autre structure que celle décrite.

Par ailleurs, bien qu'il soit particulièrement intéressant d'avoir des chariots 4 pourvus d'un crochet à boule 6 pouvant coopérer avec le boîtier 10 des bases roulantes pour accrocher une base roulante directement à l'extrémité arrière d'un train de chariots (ce qui permet de se passer d'un chariot), cet agencement n'est pas obligatoire. En outre, cette possibilité d'accrochage d'une base à l'arrière d'un chariot est indépendante du type des moyens d'attelage.

## Revendications

1. Ensemble de manutention comprenant:
- une base roulante (1) équipée d'un timon basculant (3) à l'une de ses extrémités et d'un moyen complémentaire (12,13) fixe et court à son autre extrémité et
- un chariot (4) dans lequel la base (1) peut être attelée par l'une de ses extrémités,
**caractérisé en ce que** les moyens d'attelage de la base dans le chariot sont constitués par le moyen fixe (12,13) susdit de la base et un moyen complémentaire (16) porté par l'extrémité d'un levier court (14) monté basculant (15) dans le chariot (4) entre une position haute de libération du moyen fixe et une position basse dans laquelle le moyen fixe (12,1) coopère avec le moyen complémentaire (16) à l'attelage de la base au chariot.

2. Ensemble selon la revendication 1, **caractérisé en ce que** le moyen fixe est un crochet (12) à sphère (13) d'attelage tandis que le moyen complémentaire comporte un boîtier (16) pour coiffer la sphère.

3. Ensemble selon la revendication 1 ou la revendication 2, **caractérisé en ce que** le levier (14) porte boîtier est maintenu en position haute, à l'encontre de l'effet d'un organe élastique de rappel (14a), par une came (20) coulissante par rapport au levier, escamotée par un poussoir (20a) dont l'extrémité est susceptible d'être déplacée par la sphère (13) lors de la dernière phase de son approche sous le boîtier (16).

4. Ensemble selon la revendication 3, **caractérisé en ce que** le levier (14) est équipé d'un V (23) de guidage, situé sensiblement au niveau de la sphère (13) quand le levier (14) est dans sa position haute.

5. Ensemble selon l'une des revendications 3 et 4, **caractérisé en ce que** le levier (14) est attaché à un élément de transmission (24) du mouvement d'une poignée (25) de dételage qui agit sur le boîtier (16) à l'encontre de l'effet susdit de l'organe de rappel (14a) du levier en position basse.

6. Ensemble selon la revendication 5, **caractérisé en ce que** l'élément de transmission est attelé au levier par l'intermédiaire d'un élément de verrouillage (18) du boîtier (16) sur la sphère (13), connu en lui-même et équipé d'une pédale (17) de mise en oeuvre par le pied de l'opérateur.

7. Ensemble selon l'une des revendications 3 à 6, **caractérisé en ce que** le poussoir (20a) de la came (20) est soumis à l'effet d'un organe de rappel (22) qui tend à replacer ce poussoir dans sa position apte à être au contact avec la sphère (13) et à maintenir la came dans son état non escamoté.

8. Ensemble selon l'une des revendications précédentes, **caractérisé en ce que** le chariot (4) porte un miroir supérieur (26) à l'aplomb des moyens d'attelage (12,13,16) susdits et tourné vers l'arrière.

9. Ensemble selon la revendication 1, dans lequel au moins un élément souple (30) est suspendu à un arceau du chariot (4) et a une longueur telle que son extrémité inférieure s'étende juste au-dessus de la base chargée.

10. Ensemble selon la revendication 1, dans lequel le chariot (4) comporte une extrémité avant tractée pourvue d'un timon (7) équipé de moyens d'attelage (70, 71) et une extrémité arrière tractée équipée de moyens complémentaires d'attelage qui sont agencés pour coopérer avec les moyens d'attelage du timon d'un deuxième chariot ou du timon d'une deuxième base roulante (1).

11. Ensemble selon la revendication 1, dans lequel le moyen complémentaire comprend un crochet double (112, 172) ayant des extrémités inférieure et supérieure (150) qui sont agencées pour coopérer avec des timons de types différents.

12. Ensemble selon la revendication 11 , dans lequel l'extrémité supérieure du crochet double (172) est pourvue d'une boule d'attelage (113).

13. Ensemble selon la revendication 11, dans lequel la base roulante est également équipée d'un crochet double du côté du timon.

## Patentansprüche

1. Förderanordnung, umfassend:
- eine rollende Basis (1), die an einem ihrer Enden mit einer klappbaren Deichsel (3) und an ihrem anderen Ende mit einem ortsfesten und kurzen komplementären Mittel (12, 13) versehen ist, und
- einen Wagen (4), in den die Basis (1) über eines ihrer Enden gekuppelt werden kann,
**dadurch gekennzeichnet, dass** die Kupplungsmittel zum Kuppeln der Basis in den Wagen aus dem oben genannten ortsfesten Mittel (12, 13) der Basis und einem komplementären Mittel (16) gebildet sind, das von dem Ende eines kurzen Hebels (14) getragen wird, der in dem Wagen (4) schwenkbar (15) zwischen einer oberen Freigabeposition zur Freigabe des ortsfesten Mittels und einer unteren Position gelagert ist, in der das ortsfeste Mittel (12, 1) mit dem komplementären Mittel (16) zur Kupplung der Basis am Wagen zusammenwirkt.

2. Anordnung nach Anspruch 1, **dadurch gekennzeichnet, dass** das ortsfeste Mittel ein Haken (12) mit Kupplungskugel (13) ist, während das komplementäre Mittel ein Gehäuse (16) zum Abdecken der Kugel umfasst.

3. Anordnung nach Anspruch 1 oder Anspruch 2, **dadurch gekennzeichnet, dass** der gehäusetragende Hebel (14) entgegen der Wirkung eines elastischen Rückstellelements (14a) durch eine relativ zum Hebel verschiebbare Nocke (20) in der oberen Position gehalten wird, wobei die Nocke von einem Stößel (20a) ausgerückt wird, dessen Ende dazu geeignet ist, von der Kugel (13) während der letzten Phase ihrer Annäherung unter das Gehäuse (16) verschoben zu werden.

4. Anordnung nach Anspruch 3, **dadurch gekennzeichnet, dass** der Hebel (14) mit einem Führungsprisma (23) ausgestattet ist, das sich im Wesentlichen im Bereich der Kugel (13) befindet, wenn der Hebel (14) in seiner oberen Position ist.

5. Anordnung nach einem der Ansprüche 3 und 4, **dadurch gekennzeichnet, dass** der Hebel (14) an einem Übertragungselement (24) zur Übertragung der Bewegung eines Entkupplungsgriffes (25) angebracht ist, der auf das Gehäuse (16) entgegen der oben genannten Wirkung des Rückstellelements (14a) zum Rückstellen des Hebels in die untere Position einwirkt.

6. Anordnung nach Anspruch 5, **dadurch gekennzeichnet, dass** das Übertragungselement an dem Hebel über ein Verriegelungselement (18) zum Verriegeln des Gehäuses (16) auf der Kugel (13) angekuppelt ist, wobei das Verriegelungselement an sich bekannt und mit einem Pedal (17) zur Betätigung durch den Fuß der Bedienperson versehen ist.

7. Anordnung nach einem der Ansprüche 3 bis 6, **dadurch gekennzeichnet**, das der Stößel (20a) der Nocke (20) der Wirkung eines Rückstellelements (22) ausgesetzt ist, das dazu neigt, diesen Stößel in seine Position rückzustellen, in der er geeignet ist, mit der Kugel (13) in Kontakt zu sein und die Nocke in ihrem nicht ausgerückten Zustand zu halten.

8. Anordnung nach einem der vorhergehenden Ansprüche, **dadurch gekennzeichnet, dass** der Wagen (4) senkrecht über den oben genannten Kupplungsmitteln (12, 13 16) einen oberen Spiegel (26) trägt, der nach hinten gerichtet ist.

9. Anordnung nach Anspruch 1, bei der mindestens ein flexibles Element (30) an einem Bogen des Wagens (4) aufgehängt ist und eine solche Länge hat, dass sich sein unteres Ende knapp über der beladenen Basis erstreckt.

10. Anordnung nach Anspruch 1, bei der der Wagen (4) ein gezogenes vorderes Ende umfasst, das mit einer Deichsel (7) versehen ist, die mit Kupplungsmitteln (70, 71) ausgestattet ist, sowie ein gezogenes hinteres Ende, das mit komplementären Kupplungsmitteln versehen ist, die so ausgebildet sind, dass sie mit den Kupplungsmitteln der Deichsel eines zweiten Wagens oder der Deichsel einer zweiten rollenden Basis (1) zusammenwirken.

11. Anordnung nach Anspruch 1, bei der das komplementäre Mittel einen Doppelhaken (112, 172) umfasst, der ein unteres und ein oberes Ende (150) hat, die so ausgebildet sind, dass sie mit Deichseln unterschiedlicher Art zusammenwirken.

12. Anordnung nach Anspruch 11, bei der das obere Ende des Doppelhakens (172) mit einer Kupplungskugel (113) versehen ist.

13. Anordnung nach Anspruch 11, bei der die rollende Basis ferner mit einem Doppelhaken auf der Seite der Deichsel versehen ist.

## Claims

1. Handling system comprising:
- a rolling base (1) including a tilting towbar (3) at one end and complementary short fixed means (12, 13) at its other end, and
- a cart (4) in which the base (1) can be coupled by one of its ends,
**characterized in that** the means for coupling the cart in the base consist of said fixed means (12, 13) of the base and complementary means (16) carried by the end of a short lever (14) mounted in the cart (4) to pivot (15) between a high position for releasing the fixed means and a low position in which the fixed means (12, 13) cooperate with the complementary means (16) when coupling the base to the cart.

2. System according to claim 1, **characterized in that** the fixed means comprise a hook (12) including a coupling ball (13) and the complementary means include a housing (16) adapted to fit over the ball.

3. System according to claim 1 or claim 2, **characterized in that** the housing-carrying lever (14) is held in the high position against the effect of a return spring member (14a) by a cam (20) sliding relative to the lever that is retracted by a plunger (20a) the end of which can be moved by the ball (13) during the final phase of its approach under the housing (16).

4. System according to claim 3, **characterized in that** the lever (14) includes a guide V (23) situated substantially level with the ball (13) when the lever (14) is in its high position.

5. System according to either one of Claims 3 and 4, **characterized in that** the lever (14) is attached to an element (24) for transmitting the movement of an uncoupling handle (25) which acts on the housing (16) against said effect of the member (14a) for urging the lever toward the low position.

6. System according to claim 5, **characterized in that** the transmission element is coupled to the lever via an element (18) for locking the housing (16) on the ball (13) that is known in itself and includes a pedal (17) for actuation by the foot of the operator.

7. System according to any one of Claims 3 to 6, **characterized in that** the plunger (20a) of the cam (20) is acted on by a return member (22) tending to return the plunger to its position adapted to be in contact with the ball (13) and to maintain the cam in its non-retracted state.

8. System according to any one of the preceding claims, **characterized in that** the cart (4) carries a rearward-facing mirror (26) at the top in vertical alignment with said coupling means (12, 13, 16).

9. System according to claim 1, in which at least one flexible element (30) is suspended from a hoop of the cart (4) and has a length such that its lower end extends just above the base when loaded.

10. System according to claim 1, in which the cart (4) has a towed front end including a towbar (7) including coupling means (70, 71) and a towed rear end including complementary coupling means adapted to cooperate with the coupling means of the towbar of a second cart or the towbar of a second rolling base (1).

11. System according to claim 1, in which the complementary means include a double hook (112, 172) having lower and upper ends (150) that are adapted to cooperate with different types of towbars.

12. System according to claim 11, in which the upper end of the double hook (172) includes a coupling ball (113).

13. System according to claim 11, in which the rolling base also includes a double hook at the towbar end.
